# EUROPÄISCHE PATENTSCHRIFT

(11) **EP 4 502 574 B1**
(45) Veröffentlichungstag und Bekanntmachung des Hinweises auf die Patenterteilung: **30.07.2025**
(21) Anmeldenummer: 23189484.1
(22) Anmeldetag: 03.08.2023
(51) Int. Cl.: G01N 21/05, G01N 21/03

(54) **KÜVETTE ZUR FLUID- ODER GASANALYSE, EIN SET MIT EINER ERSTEN UND EINER ZWEITEN SOLCHEN KÜVETTE, EINE SPEKTROSKOPISCHE ANALYSEVORRICHTUNG MIT EINER SOLCHEN KÜVETTE UND EIN VERFAHREN ZUR HERSTELLUNG EINER SOLCHEN KÜVETTE**
CUVETTE FOR FLUID OR GAS ANALYSIS, SET COMPRISING A FIRST AND A SECOND SUCH CUVETTE, SPECTROSCOPIC ANALYSIS DEVICE COMPRISING SUCH A CUVETTE AND METHOD FOR PRODUCING SUCH A CUVETTE
CUVETTE POUR L'ANALYSE DE FLUIDE OU DE GAZ, ENSEMBLE COMPRENANT UNE PREMIÈRE ET UNE DEUXIÈME CUVETTE, DISPOSITIF D'ANALYSE SPECTROSCOPIQUE COMPRENANT UNE TELLE CUVETTE ET PROCÉDÉ DE FABRICATION D'UNE TELLE CUVETTE

(43) Veröffentlichungstag der Anmeldung: 05.02.2025
(73) Patentinhaber: Endress+Hauser SICK GmbH+Co. KG, 01458 Ottendorf-Okrilla (DE)
(72) Erfinder: Warratz, Ralf, 22339 Hamburg (DE); Raimann, Mathias, 21039 Escheburg (DE); Reinke, Ingo, 29574 Ebstorf (DE)
(74) Vertreter: Manitz Finsterwald Patent- und Rechtsanwaltspartnerschaft mbB

(56) Entgegenhaltungen:
- WO-A2-2012/126471
- DE-A1- 102006 009 444
- US-A- 4 440 013

## Beschreibung

Die Erfindung betrifft eine Küvette zur Fluid- oder Gasanalyse, ein Set mit einer ersten und einer zweiten solchen Küvette, eine spektroskopische Analysevorrichtung mit einer solchen Küvette und ein Verfahren zur Herstellung einer solchen Küvette.

Küvetten werden in Gasanalysegeräten eingesetzt. Die Küvette umfasst hierzu eine Öffnung zur Zufuhr des zu analysierenden Gases. Weiterhin umfasst die Küvette an einem Ende einen Eingang um Licht einer bestimmten Wellenlänge oder eines Wellenlängenbereichs in die Küvette einzukoppeln. Das Licht strahlt durch die mit dem Gas gefüllte Küvette und wird am anderen Ende ausgekoppelt, wo auch die Strahlungsintensität gemessen wird. Zu analysierendes Gas absorbiert je nach enthaltenen Komponenten und deren Konzentration verschiedene Wellenlängenbereiche unterschiedlich stark, sodass die Strahlungsintensität auf der Empfängerseite reduziert wird. Dadurch ist eine zuverlässige Detektion der entsprechenden Gasbestandteile (über die transmittierten bzw. absorbierten Wellenlängen) und deren Konzentration (über die Intensität) möglich.

Die US 4 440 013 A beschreibt eine Küvette, die einen Küvettenkörper, einen Einlass, zur Zufuhr von Messgas, einen Auslass, eine Messstrecke und einen Hilfskanal umfasst. Am Ende der Messstrecke wird das Messgas über den Hilfskanal wieder zurückgeführt und am Ausgang ausgegeben. Die Küvette selbst ist L-förmig ausgebildet und die Kanäle umfassen Rundungen.

Die WO 2012/126471 A2 beschreibt einen Sensorstapel, bei dem eine beliebige Anzahl von einzelnen Gassensoren in einer Richtung des Gasflusses durch den Sensorstapel gesehen hintereinander geschaltet werden können, wodurch eine einzige poröse Struktur mit einer Anzahl von Messbereichen gebildet wird, die der Anzahl der einzelnen Gassensoren entspricht.

Die DE 10 2006 009444 A1 beschreibt eine Vorrichtung zur Emission von Licht, welche linienartig angeordnete Einrichtungen zur Abstrahlung von Licht aufweist. Weiterhin ist eine Messanordnung mit einer derartigen Vorrichtung zur Emission von Licht und einer oder mehreren Kameras sowie ein System zur Erfassung und Vermessung der Kanten oder zur Detektierung von Fehlern und/oder Unregelmäßigkeiten einer Materialbahn, die entlang einer Messebene vorbeigeführt wird, beschrieben.

Derzeitige Küvetten, bei denen das Licht am ersten Ende eintritt und am zweiten Ende austritt, haben das Problem, dass sich bei Verwendung unterschiedlich langer Küvetten die Anschlüsse an unterschiedlichen Stellen an der Küvette befinden. Neben einem Einlass umfasst eine Küvette auch einen Auslass. Dies führt insbesondere bei Verwendung von Metallrohren zur Gasführung der Küvette dazu, dass unterschiedliche Stücke gezeichnet, gefertigt und für die Verwendung vorgehalten werden müssen. Ein Aufwand, der bei der Vielzahl unterschiedlich erforderlicher Küvettenlängen erheblich ist.

Es ist daher die Aufgabe der hier vorliegenden Erfindung eine Küvette auf einfache Art und Weise und insbesondere kostengünstig zu schaffen, die in beliebiger Länge ausgestaltet sein kann.

Die Aufgabe wird durch die Küvette zur Fluid- oder Gasanalyse gemäß dem unabhängigen Anspruch 1 gelöst. Anspruch 11 gibt ein Set aus einer ersten und einer zweiten solchen Küvette wieder. Anspruch 12 beschreibt eine spektroskopische Analysevorrichtung mit einer solchen Küvette und Anspruch 13 erläutert ein Verfahren zur Herstellung einer solchen Küvette. In den Ansprüchen 2 bis 10 sind vorteilhafte Weiterbildungen der Küvette angegeben.

Die erfindungsgemäße Küvette zur Fluid- oder Gasanalyse umfasst einen Küvettenkörper, der eine Messstrecke aufweist. In die Messstrecke ist das zu analysierende Fluid oder Gas einbringbar. Die Messstrecke erstreckt sich in Längsrichtung des Küvettenkörpers. Dabei ist Licht in die zumindest eine Messstrecke einkoppelbar. Der Küvettenkörper umfasst ein erstes Ende, ein zweites Ende, einen Einlass, einen Auslass und zumindest einen ersten Hilfskanal. Das zu analysierende Fluid oder Gas ist der Küvette über den Einlass zuführbar und über den Auslass, nach Abschluss der Analyse, entnehmbar. Im Betrieb kann der Küvette permanent zu analysierendes Fluid oder Gas über den Einlass zugeführt und gleichzeitig über den Auslass entnommen werden. Die Küvette wird daher durch das zu analysierende Fluid oder Gas permanent durchströmt. Der Hilfskanal erstreckt sich ebenfalls in Längsrichtung des Küvettenkörpers. Der Hilfskanal ist mit der Messstrecke verbunden. Weiterhin ist der Einlass mit dem Auslass über die Messstrecke und den Hilfskanal verbunden. Unter dem Wortlaut "verbunden" ist zu verstehen, dass ein Austausch von Fluid bzw. Gas möglich ist. Der erste Hilfskanal ist von der Messstrecke durch eine Trennwand voneinander getrennt.

Der erfindungsgemäße Aufbau der Küvette erlaubt, dass ein Abstand zwischen Einlass und Auslass beliebig gewählt sein kann, wobei gleichzeitig das Fluid oder Gas stets entlang der vollen Länge oder entlang der überwiegenden Länge durch die Messstrecke strömen kann und entlang dieser Länge auch dem Licht ausgesetzt ist, was für eine Analyse notwendig ist. Durch den zumindest einen ersten Hilfskanal ist es hierbei möglich, dass das zu analysierende Fluid oder Gas an diejenige Stelle transportierbar bzw. strömbar ist, an welcher sich der entsprechende Einlass bzw. Auslass befindet (je nachdem ob der zumindest eine erste Hilfskanal mit dem Auslass oder dem Einlass verbunden ist). Dadurch können der Auslass und der Einlass sehr nahe zueinander angeordnet sein und dies unabhängig von der eigentlichen Länge der Küvette.

Durch den erfindungsgemäßen Aufbau der Küvette kann die Küvette eine beliebige Länge aufweisen, wobei sichergestellt ist, dass ein Abstand zwischen Einlass und Auslass und/oder die Anordnung von Einlass und Auslass stets gleich ist bzw. dass der Einlass und der Auslass stets gleich weit von dem ersten bzw. zweiten Ende beabstandet sind. Dadurch ist ein Austausch einer erfindungsgemäßen Küvette durch eine andere erfindungsgemäße Küvette mit einer anderen Länge innerhalb einer spektroskopischen Analysevorrichtung problemlos möglich, weil Einlass und Auslass eine genau definierte Position und Ausrichtung zueinander bzw. eine genau definierte Position und Ausrichtung bezogen auf ein Ende der Küvette aufweisen. Es müssen daher keine Adapter oder ähnliches verwendet werden. Gleichzeitig stellt das Einbringen des zumindest einen ersten Hilfskanals keine Schwierigkeit dar, welche die erfindungsgemäße Küvette in der Herstellung deutlich verteuern würde.

Es versteht sich, dass die Flussrichtung des zu analysierenden Fluids oder Gases auch umgekehrt werden kann. Der hierin als Einlass bezeichnete Teil kann dann als Auslass dienen, wohingegen der Auslass als Einlass fungieren kann. Dies gilt für sämtliche hierin erläuterten Ausführungsformen bzw. Weiterbildungen.

In einer vorteilhaften Weiterbildung der Küvette sind der Einlass und der Auslass näher am ersten Ende des Küvettenkörpers angeordnet als am zweiten Ende. Dies erlaubt auch die Herstellung deutlich kürzerer Küvetten.

In einer vorteilhaften Weiterbildung der Küvette sind der Einlass und der Auslass bezogen auf die Länge des Küvettenkörpers, bevorzugt ab dem ersten Ende des Küvettenkörpers, im ersten Drittel, im ersten Viertel und im ersten Fünftel des Küvettenkörpers angeordnet.

In einer vorteilhaften Weiterbildung der Küvette verlaufen die Messstrecke und der zumindest eine erste Hilfskanal parallel zueinander entlang der Längsachse des Küvettenkörpers. Das zu analysierende Fluid oder Gas strömt bei Zufuhr über den Einlass durch die Messstrecke überwiegend in eine erste Richtung und durch den zumindest einen ersten Hilfskanal überwiegend in einer zur ersten Richtung entgegengesetzten zweiten Richtung. Dadurch ist sichergestellt, dass die Messstrecke über ihre überwiegende Länge von dem Fluid oder Gas durchströmbar ist, wobei gleichzeitig durch die Verbindung zwischen Messstrecke und zumindest einem ersten Hilfskanal das Fluid oder Gas in die entgegengesetzte Richtung und damit zurück zum Einlass bzw. Auslass strömen kann. Dies erlaubt, dass der Einlass und der Auslass sehr nahe zueinander angeordnet sein können und zwar unabhängig von der Länge der Küvette. Der Auslass muss daher nicht am zweiten Ende des Küvettenkörpers angeordnet sein, sondern ist, weil das zu analysierende Fluid oder Gas über den zumindest einen ersten Hilfskanal zurück in Richtung des ersten Endes geführt wird, näher am ersten Ende als am zweiten Ende angeordnet.

Erfindungsgemäß ist der Küvettenkörper ein Strangpressteil oder Strangpressprofil (z.B. extrudierend), und besteht aus oder umfasst vorzugsweise Aluminium. Dies erlaubt eine besonders einfache Herstellung des Küvettenkörpers, welcher die Messstrecke und den zumindest einen ersten Hilfskanal beinhaltet. Dabei können Küvettenkörper mit einer beliebigen Länge hergestellt werden.

In einer vorteilhaften Weiterbildung sind der Einlass und der Auslass bezogen auf die Länge des Küvettenkörpers näher am ersten Ende angeordnet als eine Verbindung zwischen der Messstrecke und dem zumindest einen ersten Hilfskanal, die im Bereich des zweiten Endes des Küvettenkörpers angeordnet. Dadurch können Einlass und Auslass sehr nahe zueinander angeordnet sein und zwar unabhängig von der Länge der Küvette.

In einer vorteilhaften Weiterbildung ist der Einlass mit dem zumindest einen ersten Hilfskanal verbunden, wobei der Auslass direkt oder über einen zweiten Hilfskanal mit der Messstrecke verbunden ist. In diesem Fall strömt das zu analysierende Fluid oder Gas zuerst durch den zumindest einen ersten Hilfskanal, bevor es von dem zumindest einen ersten Hilfskanal über die Verbindung der Messstrecke zugeführt wird. Dies erlaubt, dass das zu analysierende Fluid oder Gas innerhalb der Küvette auf eine bestimmte Temperatur temperiert, also aufgewärmt oder abgekühlt wird. Dadurch können reproduzierbare Messergebnisse erreicht werden.

In einer vorteilhaften Weiterbildung ist der Einlass direkt oder über einen zweiten Hilfskanal mit der Messstrecke verbunden. Der Auslass ist dagegen mit dem zumindest einen ersten Hilfskanal verbunden.

In einer vorteilhaften Weiterbildung weist der zumindest eine erste Hilfskanal einen kleineren Querschnitt auf als die Messstrecke. Alternativ hierzu kann der Querschnitt des zumindest einen ersten Hilfskanals auch eine identische Größe und/oder Form zu dem Querschnitt der Messstrecke umfassen.

In einer vorteilhaften Weiterbildung sind der Einlass und der Auslass durch je eine Bohrung im Küvettenkörper gebildet. Eine solche Bohrung kann besonders einfach und auch automatisiert in den Küvettenkörper eingebracht werden. Ergänzend oder alternativ ist die Verbindung zwischen dem zumindest einen ersten Hilfskanal und der Messstrecke durch eine Bohrung, eine Ausfräsung oder eine Einprägung an einer Stirnseite des Küvettenkörpers am zweiten Ende des Küvettenkörpers gebildet. Durch derartige Bohrungen (bzw. Ausfräsungen oder

Einprägungen) kann der Küvettenkörper aus einem Strangpressprofil hergestellt werden. Die Bohrungen werden dann an denjenigen Stellen in den Küvettenkörper eingebracht, an denen der Einlass bzw. der Auslass und die Verbindung zwischen dem zumindest einen ersten Hilfskanal und der Messstrecke angeordnet sein sollen. Dadurch kann auf sehr einfache Art und Weise erreicht werden, dass Küvetten unterschiedlicher Länge dennoch einen Einlass und Auslass aufweisen, deren Abstand zueinander bzw. deren Abstand bezogen auf (beispielsweise) das erste Ende des Küvettenkörpers gleich ist.

Erfindungsgemäß umfasst die Küvette eine Lichtquelle und/oder einen Anschlussadapter zum Anschluss an eine Lichtquelle. Die Messstrecke ist am ersten Ende des Küvettenkörpers durch die Lichtquelle oder durch den Anschlussadapter fluiddicht bzw. gasdicht verschlossen. Unter einem Anschlussadapter kann beispielsweise eine Steckverbindung zur Aufnahme zumindest einer Glasfaser verstanden werden, über die entsprechendes Licht von einer Lichtquelle (zum Beispiel Laserquelle) in die Messstrecke übertragen wird. Ergänzend oder alternativ weist die Küvette eine Detektionseinrichtung auf, wobei die Messstrecke am zweiten Ende des Küvettenkörpers durch die Detektionseinrichtung fluiddicht bzw. gasdicht verschlossen ist. Die Detektionseinrichtung kann zumindest eine Photodiode oder zumindest einen pyroelektrischen Detektor oder zumindest einen Bildsensor oder zumindest einen optopneumatischen Detektor umfassen.

In einer vorteilhaften Weiterbildung umfasst der Küvettenkörper eine Referenzstrecke. Die Referenzstrecke erstreckt sich in Längsrichtung des Küvettenkörpers (parallel zur Messstrecke), wobei Licht in die Referenzstrecke einkoppelbar ist. Die Referenzstrecke umfasst weiterhin eine Öffnung, wobei in die Öffnung ein Referenzgas einleitbar ist oder wobei in die Öffnung ein zumindest teilweise durchsichtbarer Behälter (zum Beispiel aus Glas oder Kunststoff) mit einem Referenzgas einsetzbar ist. Die Referenzstrecke ist an dem ersten Ende des Küvettenkörpers über eine bzw. die Lichtquelle oder einen Anschlussadapter oder den Anschlussadapter zum Anschluss an eine Lichtquelle fluiddicht bzw. gasdicht verschlossen. Weiterhin ist die Referenzstrecke an dem zweiten Ende des Küvettenkörpers durch die Detektionseinrichtung fluiddicht bzw. gasdicht verschlossen. Vorzugsweise wird Licht mit derselben Wellenlänge und derselben Intensität durch die Referenzstrecke geschickt, welches auch durch die Messstrecke strahlt. Dadurch kann das Messergebnis der Detektionseinrichtung eingeordnet und/oder die Detektionseinrichtung kalibriert werden. Die Referenzstrecke ist bevorzugt optisch von der zumindest einen Messstrecke getrennt.

In einer vorteilhaften Weiterbildung umfasst der Einlass und/oder der Auslass eine Büchse oder einen Stecker. Insbesondere umfassen der Einlass und/oder der Auslass einen hydraulischen oder pneumatischen Schnellverbinder bzw. Steckverbinder. Dadurch kann die Küvette besonders einfach mit einer spektroskopischen Analysevorrichtung verbunden werden.

In einer vorteilhaften Weiterbildung umfasst die Küvette zumindest einen Temperierungskanal, der vorzugsweise parallel zu dem zumindest einen ersten Hilfskanal verläuft und der dazu ausgebildet ist, um das zu analysierende Fluid oder Gas vor der Zufuhr in die Messstrecke zu temperieren. Unter temperieren kann ein Kühlen oder ein Erwärmen verstanden werden. Durch den Temperierungskanal kann eine Flüssigkeit, wie beispielsweise Wasser, mit einer bestimmten Temperatur strömen. Im Temperierungskanal kann auch ein Heizdraht angeordnet sein.

In einer vorteilhaften Weiterbildung sind der Einlass und der Auslass der Küvette in Längsrichtung des Küvettenkörpers versetzt zueinander angeordnet.

In einer vorteilhaften Weiterbildung sind der Einlass und der Auslass der Küvette quer zur Längsrichtung des Küvettenkörpers versetzt zueinander angeordnet.

In einer vorteilhaften Weiterbildung hat der Küvettenkörper einen n-eckigen Querschnitt, mit n = 3, 4, 5, 6, 7, 8 oder n > 8. Vorzugsweise ist der Querschnitt viereckig. Der Einlass und der Auslass sind vorzugsweise auf derselben Außenseite des Küvettenkörpers angeordnet. Es könnte auch sein, dass der Einlass und der Auslass auf unterschiedlichen, aber bevorzugt benachbarten, Außenseiten des Küvettenkörpers angeordnet ist.

In einer vorteilhaften Weiterbildung hat die Messstrecke einen runden, einen ovalen oder einen n-eckigen Querschnitt mit n = 3, 4, 5, 6, 7, 8 oder n > 8.

In einer vorteilhaften Weiterbildung hat der zumindest eine erste Hilfskanal einen runden, einen ovalen oder einen n-eckigen Querschnitt mit n = 3, 4, 5, 6, 7, 8 oder n > 8. Bevorzugt hat der Querschnitt des zumindest einen ersten Hilfskanals die Form eines Teilkreissegments, wobei das Teilkreissegment weniger als 180° oder weniger als 100° eines 360° Vollkreises umfasst.

In einer vorteilhaften Weiterbildung ist der Küvettenkörper (insbesondere mit Ausnahme etwaiger Bohrungen) symmetrisch aufgebaut. Bevorzugt ist der Küvettenkörper Punktsymmetrisch zum Mittelpunkt. Er könnte auch spiegelsymmetrisch zu einer Mittellängsebene aufgebaut sein, die sich entlang der Längsachse erstreckt.

In einer vorteilhaften Weiterbildung sind diejenigen Bereiche innerhalb des Küvettenkörpers, die mit dem zu analysierenden Fluid oder Gas in Berührung kommen können, mit einer Beschichtung versehen, um die chemische Beständigkeit zu verbessern und/oder um die Absorption des Lichts zu reduzieren.

In einer vorteilhaften Weiterbildung umfasst der Küvettenkörper zusätzliche Fenster, um eine optische Wegstrecke erzielen zu können, die kleiner ist als die Gesamtlänge der Küvette.

Die Küvette kann eine beliebige Länge umfassen, wobei die Küvette vorzugsweise länger ist als 80 mm, 120 mm, 160 mm, 200 mm, 240 mm, 300 mm, 400 mm, 500 mm, 600 mm, 700 mm oder die vorzugsweise länger ist als 800 mm. Die Maximallänge der Küvette kann z.B. bei 1500 mm liegen.

In einer vorteilhaften Weiterbildung sind Totvolumina innerhalb des Küvettenkörpers, die die Geschwindigkeit des Fluidaustauschs oder Gasaustauschs und damit die Ansprechzeit einer spektroskopischen Analysevorrichtung reduzieren könnten, durch Dichteelemente, wie beispielsweise Stopfen, verschlossen, die ergänzend oder alternativ zu optischen Fenstern eingesetzt werden können.

In einer vorteilhaften Weiterbildung umfasst der Küvettenkörper noch zumindest eine zweite Messstrecke. Der Aufbau der zweiten Messstrecke entspricht bevorzugt dem Aufbau der ersten Messstrecke. Für die zweite Messstrecke kann es wiederum einen Einlass, einen Auslass und zumindest einen ersten Hilfskanal geben. Ergänzend oder alternativ umfasst der Küvettenkörper noch eine zweite Referenzstrecke.

In einer vorteilhaften Weiterbildung umfasst der Küvettenkörper mehrere erste Hilfskanäle, die vorzugsweise parallel zueinander geschaltet sind. In diesem Fall dienen die mehreren ersten Hilfskanäle dazu, um das zu analysierende Fluid oder Gas zu transportieren. Ergänzend oder alternativ kann es auch zusätzliche erste Hilfskanäle geben, in denen spektroskopisch inaktives Fluid oder Gas vorhanden ist und/oder in denen kein Fluid oder Gas vorhanden sind, wobei die zusätzlichen ersten Hilfskanäle dann z.B. aus Symmetriegründen eingebracht sind.

Das erfindungsgemäße Set umfasst eine erste und eine zweite Küvette. Der Küvettenkörper der ersten Küvette und der Küvettenkörper der zweiten Küvette sind unterschiedlich lang. Ein Abstand in Längsrichtung zwischen dem Einlass und dem Auslass im Küvettenkörper der ersten Küvette entspricht einem Abstand in

Längsrichtung zwischen dem Einlass und dem Auslass im Küvettenkörper der zweiten Küvette. Dadurch ist eine Austauschbarkeit unterschiedlich langer Küvetten gegeben. Es versteht sich, dass alternativ oder zusätzlich auch die Anordnung und/oder die Anschlüsse von Einlass und Auslass bei den Küvetten des Sets identisch (oder zumindest miteinander kompatibel) ausgebildet sind.

Die erfindungsgemäße spektroskopische Analysevorrichtung umfasst eine eingangs beschriebene Küvette. Die spektroskopische Analysevorrichtung umfasst eine Haltevorrichtung, einen Auslassanschluss und einen Einlassanschluss. Der Einlass der Küvette ist mit dem Auslassanschluss der Analysevorrichtung und der Auslass der Küvette mit dem Einlassanschluss der Analysevorrichtung verbunden. Bei der Verbindung handelt es sich insbesondere um eine Steckverbindung. Durch Einsatz der erfindungsgemäßen Küvette können problemlos unterschiedlich lange Küvetten mit der spektroskopischen Analysevorrichtung verbunden werden. Die spektroskopische Analysevorrichtung ist dazu ausgebildet, um das zu analysierende Fluid oder Gas auszugeben.

Das erfindungsgemäße Verfahren beschreibt die Herstellung einer eingangs beschriebenen Küvette. In einem ersten Verfahrensschritt wird der Küvettenkörper mit der Messstrecke und dem zumindest einen ersten Hilfskanal im Strangpressverfahren hergestellt. In einem zweiten Verfahrensschritt werden der Einlass und der Auslass in den Küvettenkörper gebohrt. In einem dritten Verfahrensschritt wird eine Verbindung in den Küvettenkörper eingebracht, welche die Messstrecke und den zumindest einen ersten Hilfskanal miteinander verbindet (zum Austausch des Fluids oder Gases). Die Verfahrensschritte zwei und drei können in einer beliebigen Reihenfolge, auch gleichzeitig, ausgeführt werden.

Nachfolgend wird die Erfindung rein beispielhaft unter Bezugnahme auf die Zeichnungen beschrieben. Es zeigen:
- Figuren 1, 2:: erfindungsgemäße Küvetten mit einer unterschiedlichen Länge;
- Figur 3:: ein Ausführungsbeispiel einer Spektroskopische Analysevorrichtung, die zwei Küvetten gleichzeitig aufnimmt;
- Figur 4:: ein erstes Ausführungsbeispiel einer Küvette mit entsprechenden Querschnitten;
- Figur 5:: ein zweites Ausführungsbeispiel einer Küvette mit entsprechenden Querschnitten;
- Figur 6:: ein drittes Ausführungsbeispiel einer Küvette mit einer Referenzstrecke;
- Figur 7:: ein viertes Ausführungsbeispiel einer Küvette in räumlicher Darstellung;
- Figur 8:: Schnittdarstellungen des vierten Ausführungsbeispiels; und
- Figur 9:: ein Flussdiagramm, welches ein Verfahren zur Herstellung der Küvette beschreibt.

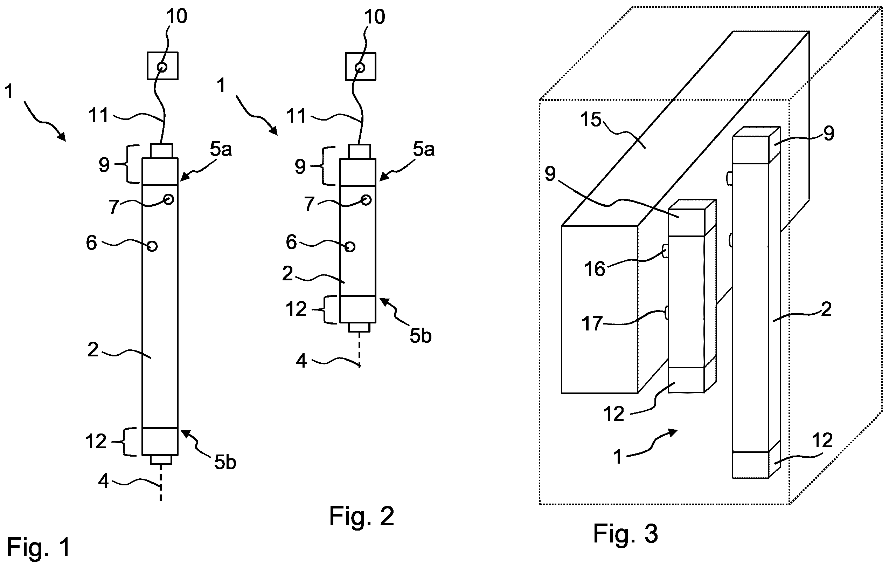

Die Figuren 1 und 2 zeigen ein Ausführungsbeispiel einer erfindungsgemäßen Küvette 1. Die Küvetten 1 in Figur 1 und Figur 2 haben eine unterschiedliche Länge. Die Küvette 1 dient zur Fluid- oder Gasanalyse. Die Küvette 1 umfasst einen Küvettenkörper 2, der wiederum zumindest eine Messstrecke 3 umfasst, in die das Fluid oder Gas zu Analyse einbringbar ist. Die zumindest eine Messstrecke 3 erstreckt sich in Längsrichtung 4, also entlang einer Längsachse, des Küvettenkörpers 2. Licht ist in die zumindest eine Messstrecke 3 einkoppelbar. Der Küvettenkörper 2 umfasst ein erstes Ende 5a, ein zweites Ende 5b, einen Einlass 6, einen Auslass 7 und einen ersten Hilfskanal 8. Das zu analysierende Fluid oder Gas ist der Küvette 1 über den Einlass 6 zuführbar und über den Auslass 7 abführbar. Der erste Hilfskanal 8 erstreckt sich ebenfalls in Längsrichtung 4 des Küvettenkörpers 2. Der erste Hilfskanal 8 ist mit der Messstrecke 3 verbunden. Weiterhin ist der Einlass 6 mit dem Auslass 7 über die Messstrecke 3 und den ersten Hilfskanal 8 verbunden.

Dargestellt ist außerdem, dass der Einlass 6 und der Auslass 7 näher am ersten Ende 5a des Küvettenkörpers 2 angeordnet sind als am zweiten Ende 5b. Insbesondere sind der Einlass 6 und der Auslass 7 bezogen auf die Länge des Küvettenkörpers 2 im ersten Drittel, im ersten Viertel wurde im ersten Fünftel des Küvettenkörpers 2 angeordnet.

Die Küvette 1 umfasst außerdem einen Anschlussadapter 9. Eine Lichtquelle 10 ist über zumindest eine Glasfaser 11 mit dem Anschlussadapter 9 verbunden. Alternativ kann die Lichtquelle 10 auch direkt an dem Küvettenkörper 2 angebracht sein. Dadurch kann Licht, welches die Lichtquelle 10 erzeugt, in Richtung des Anschlussadapters 9 übertragen werden. Der Anschlussadapter 9 ist dazu ausgebildet, um das Licht zu empfangen und in die Messstrecke 3 einzukoppeln. Vorzugsweise wird das Licht bezogen auf den Querschnitt der Messstrecke 3 zentral in die Messstrecke 3 am ersten Ende 5a des Küvettenkörpers 2 eingekoppelt. Der Anschlussadapter 9 ist vorzugsweise auch dazu ausgebildet, um die Messstrecke 3 am ersten Ende 5a des Küvettenkörpers 2 fluiddicht oder gasdicht zu verschließen. Weiter vorzugsweise umfasst der Anschlussadapter 9 hierzu Dichtmittel, beispielsweise in Form einer umlaufenden Dichtung.

Es ist auch denkbar, dass die Küvette 1 direkt die Lichtquelle 10 umfasst. In diesem Fall wäre die zumindest eine Glasfaser 11 und optional der Anschlussadapter 9 nicht notwendig. Die Lichtquelle 10 könnte vorzugsweise direkt am ersten Ende 5a des Küvettenkörpers 2 angeordnet sein. Die Lichtquelle 10 kann in diesem Fall beispielsweise die Messstrecke 3 am ersten Ende 5a des Küvettenkörpers 2 fluiddicht oder gasdicht zu verschließen. Weiter vorzugsweise umfasst die Lichtquelle 10 hierzu Dichtmittel, beispielsweise in Form einer umlaufenden Dichtung.

Die Lichtquelle 10 kann beispielsweise eine LED umfassen.

Die Küvette 1 umfasst außerdem eine Detektionseinrichtung 12. Die Detektionseinrichtung 12 ist am zweiten Ende 5b des Küvettenkörpers 2 angeordnet. Die Detektionseinrichtung 12 ist dazu ausgebildet, um die Messstrecke 3 am zweiten Ende 5b fluiddicht oder gasdicht zu verschließen. Vorzugsweise umfasst die Detektionseinrichtung 12 hierzu Dichtmittel, beispielsweise in Form einer umlaufenden Dichtung.

Figur 3 zeigt eine spektroskopische Analysevorrichtung 15, die eine Haltevorrichtung 14, einen Auslassanschluss 16 und einen Einlassanschluss 17 umfasst. Die Haltevorrichtung 14 kann durch den Auslassanschluss 16 und/oder den Einlassanschluss 17 gebildet sein. Der Einlass 6 der Küvette 1 ist mit dem Auslassanschluss 16 der Analysevorrichtung 1 verbunden. Der Auslass 7 der Küvette 1 ist mit dem Einlassanschluss 17 der Küvette 1 verbunden.

Vorzugsweise ist die spektroskopische Analysevorrichtung 15 dazu ausgebildet, um Energie zur Versorgung der Lichtquelle 10 bereitzustellen. Die spektroskopische Analysevorrichtung 15 ist weiter vorzugsweise auch dazu ausgebildet, um die Messwerte der Detektionseinrichtung 12 zu empfangen und auszuwerten. Bevorzugt ist die spektroskopische Analysevorrichtung 15 auch mit einer übergeordneten Leit- und Steuereinrichtung (nicht dargestellt) verbunden und dazu ausgebildet, um die erfassten und ausgewerteten Messwerte der Detektionseinrichtung 12 an die übergeordnete Leit- und Steuereinrichtung zu übertragen.

In Figur 3 ist ein Set aus einer ersten und einer zweiten Küvette 1 aus den Figuren 1 und 2 dargestellt, wobei beide Küvetten 1 eine unterschiedliche Länge haben. Dennoch ist der Abstand zwischen Einlass 6 und Auslass 7 bei beiden Küvetten 1 gleich. Dadurch ist eine Montage der jeweiligen Küvette 1 an der spektroskopische Analysevorrichtung 15 problemlos möglich. Die erfindungsgemäßen Küvetten 1 können auch durch andere erfindungsgemäße Küvetten 1 mit einer anderen Länge und sogar einem anderen Durchmesser getauscht werden. Gepunktet dargestellt ist ein gemeinsames Gehäuse der Analysevorrichtung 15. Das Gehäuse umfasst einen (nicht gezeigten) Einlass und einen (ebenfalls nicht gezeigten) Auslass. Vom Einlass gelangt das Gas durch die Haltevorrichtung 14 zu den Küvetten 1. Gas, welches aus dem Auslass ausströmt, wird vorzugsweise an die Umgebung abgegeben.

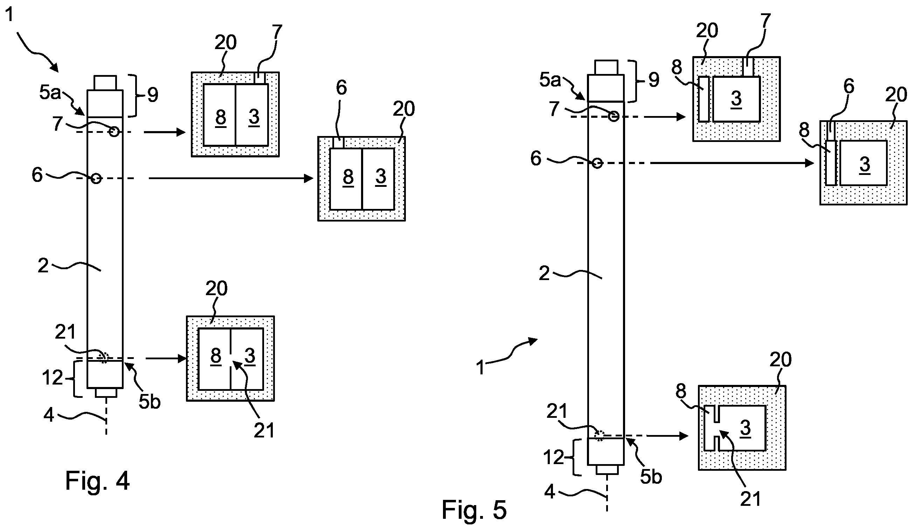

Figur 4 zeigt ein erstes Ausführungsbeispiel einer Küvette 1. Die Küvette 1 umfasst einen Einlass 6 und einen Auslass 7. Der Küvettenkörper 2 erstreckt sich in Längsrichtung 4. Weiterhin sind verschiedene Schnittdarstellungen durch unterschiedliche Stellen des Küvettenkörpers 2 dargestellt. Eine erste Schnittdarstellung zeigt einen Querschnitt durch den Einlass 6. Zu erkennen ist, dass die Küvette 1 in diesem Ausführungsbeispiel einen 4-eckigen Querschnitt aufweist. Die Messstrecke 3 ist von einer Küvettenwand 20 umgeben und von dem zumindest einen ersten Hilfskanal 8 durch eine Zwischenwand getrennt.

Die Messstrecke 3 und der zumindest eine erste Hilfskanal 8 verlaufen parallel zueinander und entlang der Längsachse 4 des Küvettenkörpers 2. Der Einlass 6 ist in diesem Fall im Bereich des ersten Endes 5a des Küvettenkörpers 2 mit dem zumindest einen ersten Hilfskanal 8 verbunden. Der Auslass 7 ist direkt mit der Messstrecke 3 verbunden wie dies aus der zweiten Schnittdarstellung hervorgeht. In diesem Fall strömt das Fluid oder Gas im zumindest einen ersten Hilfskanal 8 vom ersten Ende 5a in Richtung des zweiten Endes 5b. Die dritte Schnittdarstellung verläuft durch eine Verbindung 21 zwischen der Messstrecke 3 und dem zumindest einen ersten Hilfskanal 8. Diese Verbindung 21 ist im Bereich des zweiten Endes 5b angeordnet. Das Fluid oder Gas strömt daher über die Verbindung 21 von dem zumindest einen ersten Hilfskanal 8 in die Messstrecke 3 und innerhalb der Messstrecke 3 vom zweiten Ende 5b in Richtung des Auslasses 7, der näher am ersten Ende 5a angeordnet ist als am zweiten Ende 5b. Das zu analysierende Fluid oder Gas strömt innerhalb der Messstrecke 3 in eine entgegengesetzte Richtung bezogen auf die Richtung, in welcher das zu analysierende Fluid oder Gas in dem zumindest einen ersten Hilfskanal 8 strömt.

Der Einlass 6 und der Auslass 7 sind durch je eine Bohrung im Küvettenkörper 2 gebildet. Die Verbindung 21 zwischen dem zumindest einen ersten Hilfskanal 8 und der Messstrecke 3 ist ebenfalls durch eine Bohrung oder eine Ausfräsung oder eine Einprägung gebildet. Die Verbindung 21 wird dadurch geschaffen, dass die Stirnseite am zweiten Ende 5b des Küvettenkörpers 2 entsprechend durch die Bohrung, Ausfräsung oder Einprägung bearbeitet wird. Es wird einfach ein Teil der Trennwand, die den ersten Hilfskanal 8 von der Messstrecke 3 voneinander trennt, entfernt.

Der zumindest eine erste Hilfskanal 8 hat in diesem Fall einen Querschnitt, der bezüglich Form und Größe dem Querschnitt der Messstrecke 3 entspricht.

Der Küvettenkörper 2 ist in diesem Fall, mit Ausnahme der Bohrungen, spiegelsymmetrisch zu einer Mittellängsebene aufgebaut, die sich entlang der Längsachse 4 erstreckt.

In Figur 5 ist ein zweites Ausführungsbeispiel der Küvette 1 dargestellt. Im Unterschied zu dem Ausführungsbeispiel aus Figur 4 umfasst der zumindest eine erste Hilfskanal 8 eine von der Messstrecke 3 abweichende Querschnittsform. Die Größe des Querschnitts des Hilfskanals 8 ist auch kleiner als die Größe des Querschnitts der Messstrecke 3. Der Hilfskanal 8 ist weiter vom Zentrum des Küvettenkörpers 2 beabstandet angeordnet als die Messstrecke 3.

Weiterhin ist der Einlass 6 direkt mit der Messstrecke 3 verbunden. Die Verbindung 21 verbindet wiederum die Messstrecke 3 mit dem zumindest einen ersten Hilfskanal 8. Die Verbindung 21 ist im Bereich des zweiten Endes 5b angeordnet. Insbesondere ist die Verbindung 21 direkt an der Stirnseite des Küvettenkörpers 2 an dessen zweiten Ende 5b angeordnet. Der Auslass 7 erstreckt sich in den zumindest einen ersten Hilfskanal 8. Einlass 6 und Auslass 7 sind näher am ersten Ende 5a angeordnet als am zweiten Ende 5b.

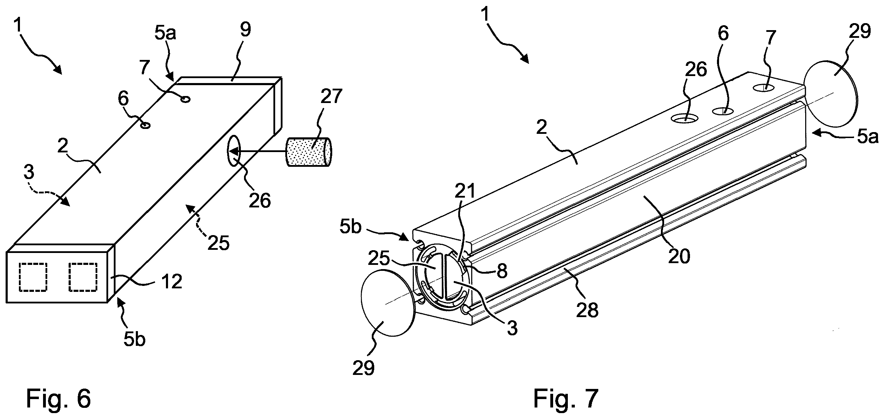

In Figur 6 ist ein drittes Ausführungsbeispiel der Küvette 1 dargestellt. Im Unterschied zu den vorherigen Ausführungsbeispielen umfasst der Küvettenkörper 2 eine Referenzstrecke 25. Die Referenzstrecke 25 erstreckt sich in Längsrichtung 4 des Küvettenkörpers 2. Licht ist vorzugsweise ebenfalls am ersten Ende 5a des Küvettenkörpers 2 in die Referenzstrecke 25 einkoppelbar. Die Detektionseinrichtung 12 ist am zweiten Ende 5b des Küvettenkörpers 2 angeordnet und verschließt die Referenzstrecke 25 am zweiten Ende 5b. Die Referenzstrecke 25 umfasst eine Öffnung 26. In die Öffnung 26 kann ein Referenzgas einleitbar sein. In diesem Ausführungsbeispiel ist in die Öffnung 26 allerdings ein zumindest teilweise durchsichtbarer Behälter 27 eingesetzt, der ein Referenzgas beinhaltet.

In Figur 7 ist ein viertes Ausführungsbeispiel der Küvette 1 dargestellt. Der Küvettenkörper 2 umfasst die Messstrecke 3 und eine Referenzstrecke 25. Die Referenzstrecke 25 hat einen Querschnitt, der gleich groß ist wie der Querschnitt der Messstrecke 3. In diesem Ausführungsbeispiel wird in die Öffnung 26, die in die Referenzstrecke 25 mündet, ein Referenzgas eingeleitet. Der zumindest eine erste Hilfskanal 8 ist zum Zentrum des Küvettenkörpers 2 weiter beabstandet als die Messstrecke 3. Der zumindest eine erste Hilfskanal 8 ist um das Zentrum (die Längsachse 4) des Küvettenkörpers 2 herumgebogen. Dabei verläuft der zumindest eine erste Hilfskanal 8 auf einem Teilkreisabschnitt. Weiterhin gibt es noch einen weiteren Hilfskanal 8, der parallel zu dem zumindest einen ersten Hilfskanal 8 geschaltet sein kann. Es ist auch möglich, dass kein zusätzliches Gas in die weiteren Hilfskanäle 8 geleitet wird und diese lediglich aus Symmetriegründen in den Küvettenkörper 2 eingebracht sind. Die Verbindung 21 zwischen dem ersten Hilfskanal 8 und der Messstrecke 3, die an der Stirnseite des Küvettenkörpers 2 an dessen zweiten Ende 5b eingebracht ist, ist ebenfalls dargestellt. In der Küvettenwand 20 des Küvettenkörpers 2 ist noch eine in Längsrichtung 4 verlaufende Nut 28 eingebracht. Diese kann zur Befestigung des Küvettenkörpers 2 an einer stationären Struktur verwendet werden. Das erste Ende 5a und das zweite Ende 5b des Küvettenkörpers 2 ist durch einen optischen Verschluss 29 verschlossen. Der optische Verschluss 29 ist transparent und besteht aus Glas oder Kunststoff. Der optische Verschluss 29 verschließt den ersten Hilfskanal 8, die Messstrecke 3 und die Referenzstrecke 28. Die Verbindung 21 bleibt allerdings offen. Der optische Verschluss 29 wird vorzugsweise auf die jeweilige Stirnseite aufgeklebt.

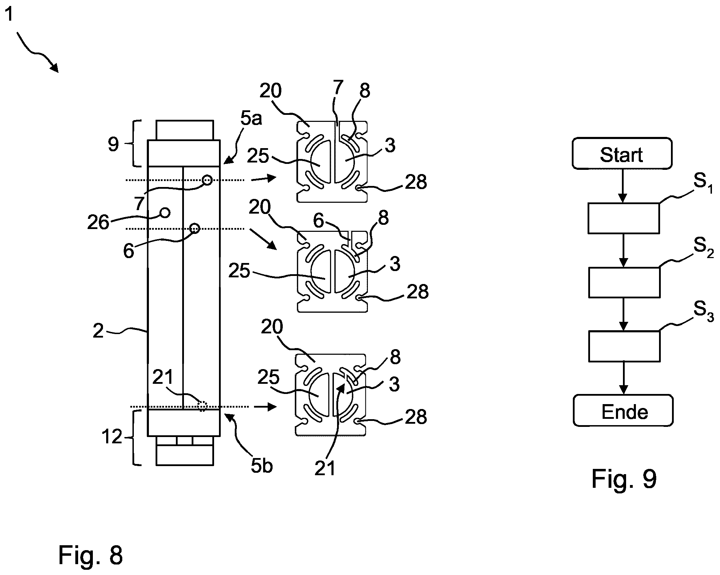

Figur 8 zeigt eine andere Ansicht des vierten Ausführungsbeispiels der Küvette 1 aus Figur 7. Es sind wieder eine erste, eine zweite und eine dritte Schnittdarstellung abgebildet. Die erste Schnittdarstellung zeigt einen Querschnitt durch den Auslass 7. Der Auslass 7 ist direkt mit der Messstrecke 3 verbunden. Die zweite Schnittdarstellung zeigt einen Querschnitt durch den Einlass 6. Wie gezeigt, ist der zumindest eine erste Hilfskanal 8 mit dem Einlass 6 verbunden. Die dritte Schnittdarstellung zeigt einen Querschnitt durch die Verbindung 21. Die Verbindung 21 ist durch eine Bohrung, Ausfräsung oder Einprägung an der Stirnseite des Küvettenkörpers 2 entstanden, wodurch die Trennwand zwischen dem ersten Hilfskanal 8 und der Messstrecke 3 auf eine bestimmte Länge abgetragen ist, wobei die Verbindung 21 in Fig. 8 kleiner als in Fig. 7 dargestellt ist.

Figur 9 zeigt ein Flussdiagramm, welches ein Verfahren zur Herstellung der Küvette 1 beschreibt. In einem ersten Verfahrensschritt S₁ wird der Küvettenkörper 2 mit der Messstrecke 3 und dem zumindest einen ersten Hilfskanal 8 im Strangpressverfahren hergestellt. In einem zweiten Verfahrensschritt S₂ werden der Einlass 6 und der Auslass 7 in den Küvettenkörper 2 gebohrt. In einem dritten Verfahrensschritt S₃ wird eine Verbindung in den Küvettenkörper 2 eingebracht, welche die Messstrecke 3 und den zumindest einen ersten Hilfskanal 8 miteinander verbindet (zum Austausch des Fluids oder Gases).

Die Erfindung ist nicht auf die beschriebenen Ausführungsbeispiele beschränkt, sondern nur durch den Umfang der angehängten Ansprüche. Im Rahmen der Erfindung sind alle beschriebenen und/oder gezeichneten Merkmale beliebig miteinander kombinierbar, sofern nicht etwas Gegenteiliges angegeben ist.

### Bezugszeichenliste

| | |
|---|---|
| Küvette | 1 |
| Küvettenkörper | 2 |
| Messstrecke | 3 |
| Längsrichtung | 4 |
| Erstes Ende | 5a |
| Zweites Ende | 5b |
| Einlass | 6 |
| Auslass | 7 |
| Erster Hilfskanal | 8 |
| Anschlussadapter | 9 |
| Lichtquelle | 10 |
| Glasfaser | 11 |
| Detektionseinrichtung | 12 |
| Haltevorrichtung | 14 |
| Spektroskopische Analysevorrichtung | 15 |
| Auslassanschluss | 16 |
| Einlassanschluss | 17 |
| Küvettenwand | 20 |
| Verbindung | 21 |
| Referenzstrecke | 25 |
| Öffnung | 26 |
| Behälter | 27 |
| Nut | 28 |
| Optischer Verschluss | 29 |
| Verfahrensschritte | S₁, S₂, S₃ |

## Patentansprüche

1. Küvette (1) zur Fluid- oder Gasanalyse, wobei die Küvette (1) einen Küvettenkörper (2) mit einer Messstrecke (3) umfasst, in die Fluid oder Gas zur Analyse einbringbar ist, wobei sich die Messstrecke (3) in Längsrichtung des Küvettenkörpers (2) erstreckt und wobei Licht in die zumindest eine Messstrecke (3) einkoppelbar ist, wobei der Küvettenkörper (2) ein erstes Ende (5a), ein zweites Ende (5b), einen Einlass (6), einen Auslass (7) und zumindest einen ersten Hilfskanal (8) umfasst, wobei das zu analysierende Fluid oder Gas der Küvette (1) über den Einlass (6) zuführbar und über den Auslass (7) abführbar ist, wobei sich der erste Hilfskanal (8) in Längsrichtung (4) des Küvettenkörpers (2) erstreckt und wobei der erste Hilfskanal (8) mit der Messstrecke (3) verbunden ist und wobei der Einlass (6) mit dem Auslass (7) über die Messstrecke (3) und den ersten Hilfskanal (8) verbunden sind,
wobei
die Küvette (1) eine Lichtquelle (10) und/oder einen Anschlussadapter (9) zum Anschluss an eine Lichtquelle (10) umfasst, wobei die Messstrecke (3) am ersten Ende (5a) des Küvettenkörpers (2) durch die Lichtquelle (10) oder den Anschlussadapter (9) verschlossen ist und/oder
wobei die Küvette (1) eine Detektionseinrichtung (12) umfasst, wobei die Messstrecke (3) am zweiten Ende (5b) des Küvettenkörpers (2) durch die Detektionseinrichtung (12) verschlossen ist,
und wobei der erste Hilfskanal (8) von der Messstrecke (3) durch eine Trennwand voneinander getrennt ist,
**dadurch gekennzeichnet, dass** der Küvettenkörper ein Strangpressteil, insbesondere aus Aluminium, ist.

2. Küvette (1) nach Anspruch 1,
wobei der Einlass (6) und der Auslass (7) näher am ersten Ende (5a) des Küvettenkörpers (2) angeordnet sind als am zweiten Ende (5b).

3. Küvette (1) nach Anspruch 1 oder 2,
wobei der Einlass (6) und der Auslass (7) bezogen auf die Länge des Küvettenkörpers (2) im ersten Drittel, im ersten Viertel oder im ersten Fünften des Küvettenkörpers (2) angeordnet sind.

4. Küvette (1) nach einem der vorstehenden Ansprüche,
wobei die Messstrecke (3) und der zumindest eine erste Hilfskanal (8) parallel zueinander entlang der Längsachse (4) des Küvettenkörpers (2) verlaufen und wobei das zu analysierende Fluid oder Gas bei Zufuhr durch den Einlass (6):
a) durch die Messstrecke (3) überwiegend in einer ersten Richtung strömt; und
b) durch den zumindest einen ersten Hilfskanal (8) überwiegend in einer zur ersten Richtung entgegengesetzten zweiten Richtung strömt.

5. Küvette (1) nach einem der vorstehenden Ansprüche,
wobei der Einlass (6) und der Auslass (7) bezogen auf die Länge des Küvettenkörpers (2) näher am ersten Ende (5a) angeordnet sind als eine Verbindung (21) zwischen der Messstrecke (3) und dem zumindest einen ersten Hilfskanal (8), die im Bereich des zweiten Endes (5b) des Küvettenkörpers (2) angeordnet ist.

6. Küvette (1) nach einem der vorstehenden Ansprüche,
wobei der Einlass (6) mit dem zumindest einen ersten Hilfskanal (8) verbunden ist und wobei der Auslass (7) direkt oder über einen zweiten Hilfskanal mit der Messstrecke (3) verbunden ist.

7. Küvette (1) nach einem der Ansprüche 1 bis 5,
wobei der Einlass (6) direkt oder über einen zweiten Hilfskanal mit der Messstrecke (3) verbunden ist und wobei der Auslass (7) mit dem zumindest einen ersten Hilfskanal (8) verbunden ist.

8. Küvette (1) nach einem der vorstehenden Ansprüche,
wobei der zumindest eine erste Hilfskanal (8) einen kleineren Querschnitt aufweist als die Messstrecke (3) oder wobei der Querschnitt des zumindest einen ersten Hilfskanals (8) identisch zu dem Querschnitt der Messstrecke (3) ist.

9. Küvette (1) nach einem der vorstehenden Ansprüche,
wobei der Einlass (6) und der Auslass (7) durch je eine Bohrung im Küvettenkörper (2) gebildet sind und/oder wobei die Verbindung (21) zwischen dem zumindest einen ersten Hilfskanal (8) und der Messtrecke (3) durch eine Bohrung, eine Ausfräsung oder eine Einprägung an einer Stirnseite des Küvettenkörpers (2) am zweiten Ende (5b) gebildet ist.

10. Küvette (1) nach einem der vorstehenden Ansprüche,
wobei der Küvettenkörper (2) eine Referenzstrecke (25) umfasst, die sich in Längsrichtung (4) des Küvettenkörpers (2) erstreckt und wobei Licht in die Referenzstrecke (25) einkoppelbar ist, wobei die Referenzstrecke (25) eine Öffnung (26) umfasst, wobei in die Öffnung (26) ein Referenzgas einleitbar ist oder wobei in die Öffnung (26) ein zumindest teilweise durchsichtbarer Behälter (27) mit einem Referenzgas einsetzbar ist.

11. Set aus einer ersten und einer zweiten Küvette (1), die nach einem der vorstehenden Ansprüche aufgebaut sind,
wobei der Küvettenkörper (2) der ersten Küvette (1) und der Küvettenkörper (2) der zweiten Küvette (1) unterschiedlich lang sind, wobei ein Abstand in Längsrichtung (4) zwischen dem Einlass (6) und dem Auslass (7) im Küvettenkörper (2) der ersten Küvette (1) einem Abstand in Längsrichtung (4) zwischen dem Einlass (6) und dem Auslass (7) im Küvettenkörper (2) der zweiten Küvette (1) entspricht.

12. Spektroskopische Analysevorrichtung (15) mit einer Küvette (1), die gemäß einem der Ansprüche 1 bis 10 aufgebaut ist, wobei die spektroskopische Analysevorrichtung (15) eine Haltevorrichtung, einen Auslassanschluss (16) und einen Einlassanschluss (17) umfasst, wobei der Einlass (6) der Küvette (1) mit dem Auslassanschluss (16) der Analysevorrichtung und der Auslass (7) der Küvette (1) mit dem Einlassanschluss (17) der Analysevorrichtung (15) verbunden ist.

13. Verfahren (1) zur Herstellung einer Küvette (1) die gemäß einem der Ansprüche 1 bis 10 aufgebaut ist, mit den folgenden Verfahrensschritten:
- Herstellen (S₁) des Küvettenkörpers (2) mit der Messstrecke (3) und dem zumindest einen ersten Hilfskanal (8) im Strangpressverfahren;
- Bohren (S₂) des Einlasses (6) in den Küvettenkörper (2) und Bohren des Auslasses (7) in den Küvettenkörper (2);
- Einbringen (S₃) einer Verbindung (21) in den Küvettenkörper (2), die die Messstrecke (3) und den zumindest einen ersten Hilfskanal (8) miteinander verbindet
- Verschliessen der Messstrecke (3) am ersten Ende (5a) des Küvettenkörpers (2) durch eine Lichtquelle (10) oder durch einen Anschlussadapter (9), und/oder Verschliessen der Messstrecke (3) am zweiten Ende (5b) des Küvettenkörpers (2) durch eine Detektionseinrichtung (12).

## Claims

1. A cuvette (1) for fluid or gas analysis, wherein the cuvette (1) comprises a cuvette body (2) having a measurement path (3) into which fluid or gas can be introduced for analysis, wherein the measurement path (3) extends in the longitudinal direction of the cuvette body (2) and wherein light can be coupled into the at least one measurement path (3), wherein the cuvette body (2) comprises a first end (5a), a second end (5b), an inlet (6), an outlet (7) and at least one first auxiliary channel (8), wherein the fluid or gas to be analyzed can be fed to the cuvette (1) via the inlet (6) and can be discharged via the outlet (7), wherein the first auxiliary channel (8) extends in the longitudinal direction (4) of the cuvette body (2) and wherein the first auxiliary channel (8) is connected to the measurement path (3) and wherein the inlet (6) is connected to the outlet (7) via the measurement path (3) and the first auxiliary channel (8),
wherein
the cuvette (1) comprises a light source (10) and/or a connection adapter (9) for connection to a light source (10), wherein the measurement path (3) is closed at the first end (5a) of the cuvette body (2) by the light source (10) or the connection adapter (9), and/or wherein the cuvette (1) comprises a detection device (12), wherein the measurement path (3) is closed at the second end (5b) of the cuvette body (2) by the detection device (12),
and wherein the first auxiliary channel (8) is separated from the measurement path (3) by a partition wall,
**characterized in that** the cuvette body is an extruded part, in particular composed of aluminum.

2. A cuvette (1) according to claim 1,
wherein the inlet (6) and the outlet (7) are arranged closer to the first end (5a) of the cuvette body (2) than to the second end (5b).

3. A cuvette (1) according to claim 1 or 2,
wherein the inlet (6) and the outlet (7) are arranged in the first third, in the first quarter or in the first fifth of the cuvette body (2) with respect to the length of the cuvette body (2).

4. A cuvette (1) according to any one of the preceding claims,
wherein the measurement path (3) and the at least one first auxiliary channel (8) extend in parallel with one another along the longitudinal axis (4) of the cuvette body (2) and wherein, on the feeding through the inlet (6), the fluid or gas to be analyzed:
a) flows through the measurement path (3) predominantly in a first direction; and
b) flows through the at least one first auxiliary channel (8) predominantly in a second direction opposite to the first direction.

5. A cuvette (1) according to any one of the preceding claims,
wherein the inlet (6) and the outlet (7) are arranged closer to the first end (5a) with respect to the length of the cuvette body (2) than a connection (21) between the measurement path (3) and the at least one first auxiliary channel (8), which connection (21) is arranged in the region of the second end (5b) of the cuvette body (2).

6. A cuvette (1) according to any one of the preceding claims,
wherein the inlet (6) is connected to the at least one first auxiliary channel (8) and wherein the outlet (7) is connected directly or via a second auxiliary channel to the measurement path (3).

7. A cuvette (1) according to any one of the claims 1 to 5,
wherein the inlet (6) is connected directly or via a second auxiliary channel to the measurement path (3) and wherein the outlet (7) is connected to the at least one first auxiliary channel (8).

8. A cuvette (1) according to any one of the preceding claims,
wherein the at least one first auxiliary channel (8) has a smaller cross-section than the measurement path (3) or wherein the cross-section of the at least one first auxiliary channel (8) is identical to the cross-section of the measurement path (3).

9. A cuvette (1) according to any one of the preceding claims,
wherein the inlet (6) and the outlet (7) are formed by one bore each in the cuvette body (2) and/or
wherein the connection (21) between the at least one first auxiliary channel (8) and the measurement path (3) is formed by a bore, a milled opening or an indentation at an end face of the cuvette body (2) at the second end (5b).

10. A cuvette (1) according to any one of the preceding claims,
wherein the cuvette body (2) comprises a reference path (25) which extends in the longitudinal direction (4) of the cuvette body (2) and wherein light can be coupled into the reference path (25), wherein the reference path (25) comprises an opening (26), wherein a reference gas can be introduced into the opening (26) or wherein an at least partly transparent container (27) having a reference gas can be inserted into the opening (26).

11. A set comprising a first and a second cuvette (1) which are designed according to any one of the preceding claims,
wherein the cuvette body (2) of the first cuvette (1) and the cuvette body (2) of the second cuvette (1) are of different lengths, wherein a spacing in the longitudinal direction (4) between the inlet (6) and the outlet (7) in the cuvette body (2) of the first cuvette (1) corresponds to a spacing in the longitudinal direction (4) between the inlet (6) and the outlet (7) in the cuvette body (2) of the second cuvette (1).

12. A spectroscopic analysis apparatus (15) comprising a cuvette (1) which is designed according to any one of the claims 1 to 10, wherein the spectroscopic analysis apparatus (15) comprises a holding apparatus, an outlet connector (16) and an inlet connector (17), wherein the inlet (6) of the cuvette (1) is connected to the outlet connector (16) of the analysis apparatus and the outlet (7) of the cuvette (1) is connected to the inlet connector (17) of the analysis apparatus (15).

13. A method for manufacturing a cuvette (1) which is designed according to any one of the claims 1 to 10, having the following method steps:
- manufacturing (S₁) the cuvette body (2) having the measurement path (3) and the at least one first auxiliary channel (8) in an extrusion process;
- drilling (S₂) the inlet (6) into the cuvette body (2) and drilling the outlet (7) into the cuvette body (2);
- inserting (S₃) a connection (21) into the cuvette body (2), which connection (21) connects the measurement path (3) and the at least one first auxiliary channel (8) to one another,
- closing the measurement path (3) at the first end (51) of the cuvette body (2) by a light source (10) or by a connection adapter (9) and/or closing the measurement path (3) at the second end (5b) of the cuvette body (2) by a detection device (12).

## Revendications

1. Cuvette (1) pour l'analyse de fluide ou de gaz, dans laquelle
la cuvette (1) comprend un corps de cuvette (2) avec un trajet de mesure (3) dans lequel du fluide ou du gaz peut être introduit pour l'analyse,
le trajet de mesure (3) s'étend dans la direction longitudinale du corps de cuvette (2) et de la lumière peut être injectée dans ledit au moins un trajet de mesure (3),
le corps de cuvette (2) comprend une première extrémité (5a), une deuxième extrémité (5b), une entrée (6), une sortie (7) et au moins un premier canal auxiliaire (8),
le fluide ou le gaz à analyser peut être amené à la cuvette (1) par l'entrée (6) et être évacué par la sortie (7),
le premier canal auxiliaire (8) s'étend dans la direction longitudinale (4) du corps de cuvette (2), et le premier canal auxiliaire (8) est relié au trajet de mesure (3),
l'entrée (6) est reliée à la sortie (7) par l'intermédiaire du trajet de mesure (3) et du premier canal auxiliaire (8),
la cuvette (1) comprend une source de lumière (10) et/ou un adaptateur de raccordement (9) pour le raccordement à une source de lumière (10),
le trajet de mesure (3) est fermé à la première extrémité (5a) du corps de cuvette (2) par la source de lumière (10) ou par l'adaptateur de raccordement (9), et/ou
la cuvette (1) comprend un dispositif de détection (12), le trajet de mesure (3) étant fermé à la deuxième extrémité (5b) du corps de cuvette (2) par le dispositif de détection (12),
et le premier canal auxiliaire (8) est séparé du trajet de mesure (3) par une cloison de séparation,
**caractérisée en ce que**
le corps de cuvette est une pièce extrudée, en particulier en aluminium.

2. Cuvette (1) selon la revendication 1,
dans laquelle l'entrée (6) et la sortie (7) sont disposées plus près de la première extrémité (5a) du corps de cuvette (2) que de la deuxième extrémité (5b).

3. Cuvette (1) selon la revendication 1 ou 2,
dans laquelle l'entrée (6) et la sortie (7) sont disposées, par rapport à la longueur du corps de cuvette (2), dans le premier tiers, le premier quart ou le premier cinquième du corps de cuvette (2).

4. Cuvette (1) selon l'une des revendications précédentes,
dans laquelle le trajet de mesure (3) et ledit au moins un premier canal auxiliaire (8) s'étendent parallèlement l'un à l'autre le long de l'axe longitudinal (4) du corps de cuvette (2), et le fluide ou le gaz à analyser, lorsqu'il est amené par l'entrée (6)
a) s'écoule à travers le trajet de mesure (3) principalement dans une première direction ; et
b) s'écoule à travers ledit au moins un premier canal auxiliaire (8) principalement dans une deuxième direction opposée à la première direction.

5. Cuvette (1) selon l'une des revendications précédentes,
dans laquelle l'entrée (6) et la sortie (7) sont disposées, par rapport à la longueur du corps de cuvette (2), plus près de la première extrémité (5a) qu'une liaison (21) entre le trajet de mesure (3) et ledit au moins un premier canal auxiliaire (8), qui est disposée dans la zone de la deuxième extrémité (5b) du corps de cuvette (2).

6. Cuvette (1) selon l'une des revendications précédentes,
dans laquelle l'entrée (6) est reliée audit au moins un premier canal auxiliaire (8), et la sortie (7) est reliée au trajet de mesure (3) directement ou via un deuxième canal auxiliaire.

7. Cuvette (1) selon l'une des revendications 1 à 5,
dans laquelle l'entrée (6) est reliée au trajet de mesure (3) directement ou par l'intermédiaire d'un deuxième canal auxiliaire, et la sortie (7) est reliée audit au moins un premier canal auxiliaire (8).

8. Cuvette (1) selon l'une des revendications précédentes,
dans laquelle ledit au moins un premier canal auxiliaire (8) présente une section transversale plus petite que le trajet de mesure (3) ou la section transversale dudit au moins un premier canal auxiliaire (8) est identique à la section transversale du trajet de mesure (3).

9. Cuvette (1) selon l'une des revendications précédentes,
dans laquelle l'entrée (6) et la sortie (7) sont formées chacune par un perçage dans le corps de cuvette (2), et/ou
la liaison (21) entre ledit au moins un premier canal auxiliaire (8) et le trajet de mesure (3) est formée par un perçage, un fraisage ou une empreinte sur une face frontale du corps de cuvette (2) à la deuxième extrémité (5b).

10. Cuvette (1) selon l'une des revendications précédentes,
dans laquelle le corps de cuvette (2) comprend un trajet de référence (25) qui s'étend dans la direction longitudinale (4) du corps de cuvette (2), et de la lumière peut être injectée dans le trajet de référence (25),
le trajet de référence (25) présente une ouverture (26),
un gaz de référence peut être introduit dans l'ouverture (26), ou un récipient (27) qui est au moins partiellement transparent et qui contient un gaz de référence peut être inséré dans l'ouverture (26).

11. Ensemble constitué d'une première et d'une deuxième cuvette (1) qui sont réalisées selon l'une des revendications précédentes,
dans lequel
le corps de cuvette (2) de la première cuvette (1) et le corps de cuvette (2) de la deuxième cuvette (1) sont de longueurs différentes,
une distance dans la direction longitudinale (4) entre l'entrée (6) et la sortie (7) dans le corps de cuvette (2) de la première cuvette (1) correspond à une distance dans la direction longitudinale (4) entre l'entrée (6) et la sortie (7) dans le corps de cuvette (2) de la deuxième cuvette (1).

12. Dispositif d'analyse spectroscopique (15) comprenant une cuvette (1) réalisée selon l'une des revendications 1 à 10,
dans lequel
le dispositif d'analyse spectroscopique (15) comprend un dispositif de support, un orifice de sortie (16) et un orifice d'entrée (17),
l'entrée (6) de la cuvette (1) est reliée à l'orifice de sortie (16) du dispositif d'analyse, et la sortie (7) de la cuvette (1) est reliée à l'orifice d'entrée (17) du dispositif d'analyse (15).

13. Procédé (1) de fabrication d'une cuvette (1) réalisée selon l'une des revendications 1 à 10, comprenant les étapes de procédé suivantes consistant à :
- fabriquer (S₁) le corps de cuvette (2) avec le trajet de mesure (3) et ledit au moins un premier canal auxiliaire (8) par un procédé d'extrusion ;
- percer (S₂) l'entrée (6) dans le corps de cuvette (2) et percer la sortie (7) dans le corps de cuvette (2) ;
- établir (S₃) une liaison (21) dans le corps de cuvette (2), qui relie le trajet de mesure (3) et ledit au moins un premier canal auxiliaire (8) l'un à l'autre,
- obturer le trajet de mesure (3) à la première extrémité (5a) du corps de cuvette (2) par une source de lumière (10) ou par un adaptateur de raccordement (9), et/ou obturer le trajet de mesure (3) à la deuxième extrémité (5b) du corps de cuvette (2) par un dispositif de détection (12).
